# EUROPÄISCHE PATENTSCHRIFT

(11) **EP 4 543 264 B1**
(45) Veröffentlichungstag und Bekanntmachung des Hinweises auf die Patenterteilung: **18.03.2026**
(21) Anmeldenummer: 23730526.3
(22) Anmeldetag: 07.06.2023
(51) Int. Cl.: F24C 15/18, F24C 15/32, A47J 27/04

(54) **DAMPFGARSCHUBLADE MIT RAUMTEILER UND HEIZELEMENTEN**
STEAM-COOKING DRAWER WITH PARTITION AND HEATING ELEMENTS
TIROIR DE CUISSON À LA VAPEUR AVEC CLOISON ET ÉLÉMENTS CHAUFFANTS

(30) Priorität: 21.06.2022 DE 102022206183
(43) Veröffentlichungstag der Anmeldung: 30.04.2025
(73) Patentinhaber: BSH Hausgeräte GmbH, 81739 München (DE)
(72) Erfinder: SAUERBIER, Rolf, 76275 Ettlingen (DE); WAGNER, Benjamin, 75015 Bretten (DE); BALL, Ludovic, 67770 Sessenheim (FR)
(86) Internationale Anmeldenummer: PCT/EP2023/065188
(87) Internationale Veröffentlichungsnummer: WO 2023/247181

(56) Entgegenhaltungen:
- CN-A- 106 037 456
- CN-U- 209 285 010
- DE-A1- 10 132 581
- FR-A1- 2 635 171

## Beschreibung

Die Erfindung betrifft eine Dampfgarschublade, insbesondere Haushalts-Dampfgarschublade mit einem aus einem Schubladengehäuse aus- und einfahrbaren Schubfach, aufweisend einen Garraum der einen wannenförmigen, durch einen Deckel abdeckbaren Gargutbehälter aufweist, einen Nassdampferzeuger, einen Dampfzufuhrkanal, der dazu eingerichtet ist, von dem Nassdampferzeuger erzeugten Dampf in den Garraum zu leiten, und mindestens einen Dampfablasskanal, der dazu eingerichtet ist, Dampf aus dem Garraum abzuleiten. Die Erfindung ist insbesondere vorteilhaft anwendbar auf Haushalts-Dampfgarschubladen.

DE 10 2007 039 379 B4 offenbart ein Gargerät mit einem Garraum, der in mehrere offen miteinander verbundene Klimazonen unterteilbar ist, und mit einer Vorrichtung zur Erzeugung sowie zur Führung von Dampf-Luft-Gemischen im Garraum, wobei jeder Klimazone ein Dampf-Luft-Gemisch zuordbar ist, und die Strömungsgeschwindigkeiten jedes Dampf-Luft-Gemischs im Garraum derart einstellbar sind, dass ein Durchströmen des Garraums entlang einer Vielzahl von im Wesentlichen horizontalen und/ oder parallelen Strömungspfaden, im Wesentlichen ohne gegenseitige Beeinflussung der Klimata in den Klimazonen, erzwingbar ist, wobei die Vorrichtung zur Erzeugung sowie zur Führung der Dampf-Luft-Gemische zumindest eine Dampferzeugungseinrichtung, eine Vielzahl von Dampfzufuhreinrichtungen, zumindest eine Dampfabfuhreinrichtung, zumindest eine Einrichtung zur Erzeugung einer Strömung (mit zumindest einem Gebläse oder zumindest einer Pumpe, eine Vielzahl von Strömungsreguliereinrichtungen und zumindest eine Heizvorrichtung umfasst und mit einer Steuer- oder Regeleinrichtung in Wirkverbindung steht, damit das Klima, bestimmt durch zumindest die Temperatur, die Feuchtigkeit und die Strömungsgeschwindigkeit des Dampf-Luft-Gemisches, für jede Klimazone einzeln steuerbar oder regelbar ist.

CN 109567574 A offenbart Kochgeschirr, dass mehrere in vertikaler Richtung gestapelte Dampfbehandlungsschalen umfasst, wobei jede Dampfbehandlungsschale einen am Boden angeordneten luftdichten Schalenboden und mehrere in der Umfangswand ausgebildete Lufteinlässe umfasst, wobei die Lufteinlässe zum Einleiten von Dampf dienen. Ein erstes Verbindungsteil ist am oberen Rand jeder Dampfbehandlungsschale angeordnet und ein zweites Verbindungsteil ist am unteren Rand der Dampfbehandlungsschale angeordnet; jeweils zwei benachbarte Dämpfeinsätze sind durch das erste Verbindungsteil und das zweite Verbindungsteil, die gegenüberliegend angeordnet sind, einstückig gestapelt. Durch Ausbilden der Lufteinlässe in jeder Dampfbehandlungsschale kann eine unabhängige Luftversorgung jeder Dampfbehandlungsschale erreicht werden, und die Dampfbehandlungsschalen sind mit den luftdichten Schalenböden sowie den ersten Verbindungsteilen und den zweiten Verbindungsteilen versehen, die in der Lage sind, eine gegenseitige geschlossene Verbindung zu realisieren , so dass das Problem der Geruchsbelästigung gelöst wird, wenn verschiedene Lebensmittel durch einen Dampfgarer gedämpft werden.

EP 2 299 181 B1 offenbart einen beheizbaren Raumteiler, mittels dessen eine Ofenraum in zwei übereinanderliegende, individuell heizbare Teilräume unterteilbar ist.

CN 209826263 U offenbart einen Dampfofen mit variablem Garraumvolumen, das durch Einsatz eines dampfdichten Raumteilers verkleinerbar ist.

WO 2014/095659 A1 offenbart einen Ofen mit einem Kochtopf mit einer Schale, einem Deckel, der die Oberseite der Schale bedeckt, und einer Ablage, die auf der Schale angeordnet ist und auf dem zu kochende Speisen platziert werden. Der Kochtopf umfasst in der Schale ein erstes Fach, in dem die Ablage platziert ist, eine Heizvorrichtung, ein zweites Fach, in dem die Heizvorrichtung platziert ist, und eine zwischen dem ersten Fach und dem zweiten Fach angeordnete Trennwand.

US 2007/158331 A1 offenbart eine Wärmeschublade zum Anbringen in einem Gehäuse mit einer Aussparung, in der die Wärmeschublade aufgenommen wird, wobei die Wärmeschublade umfasst: ein Gehäuse, das eine Kammer mit einer offenen Fläche definiert, die Zugang zu der Kammer bietet; eine Schublade, die beweglich an dem Gehäuse montiert ist, um zwischen einer geschlossenen und einer geöffneten Position durch die offene Seite in die Kammer hinein und aus ihr heraus bewegt zu werden und eine Heizkammer definiert, in der Lebensmittel zum Erhitzen aufgenommen werden, ein Heizelement, das an dem Gehäuse oder der Schublade vorgesehen ist und eine Steuerung, die betriebsfähig mit dem Heizelement gekoppelt ist, um das Heizelement selektiv zu betätigen, und konfiguriert ist, um das Heizelement selektiv zu betätigen, um die Temperatur in der Heizkammer auf einer von einer Gartemperatur, einer Erwärmungstemperatur oder einer Langsamkochtemperatur zu halten.

EP 2 431 667 A1 offenbart einen beheizbarer Einschub-Garraumteiler für ein Gargerät und ein Gargerät. Der Einschub-Garraumteiler ist mit einer Flächenheizung ausgerüstet, wobei eine Oberseite des Einschub-Garraumteilers als eine Gargutaufnahme ausgebildet ist. Das Gargerät weist einen Garraum mit mehreren Einschubebenen auf, in welche jeweils ein Einschub-Garraumteiler, einführbar ist, wobei jeder der Einschubebenen ein elektrischer Anschluss für einen elektrisch betreibbaren Einschub-Garraumteiler zugeordnet ist, und wobei das Gargerät dazu eingerichtet ist, einen Leistungseintrag zumindest in den Einschub-Garraumteiler in Abhängigkeit von einer durch den Einschub-Garraumteiler belegten Einschubebene einzustellen.

DE 10 2011 101 042 A1 offenbart ein Gargerät umfassend ein Gehäuse, in dem eine Schublade längsverschieblich geführt ist, in der ein Gargutträger anbringbar oder angebracht ist. Um ein derartiges Gargerät zu verbessern, sind an der Oberseite des Gehäuses mehrere Infrarotstrahler hinter einer Glasplatte angeordnet und/oder sind an der Unterseite des Gehäuses mehrere Infrarotstrahler hinter einer Glasplatte angeordnet.

US 8 217 316 B2 offenbart ein Heizsystem, das ein Gehäuse mit Wänden aufweist, die eine innere Heizkammer definieren. Sensoren sind an einer Außenfläche der Wände angebracht. Heizkissen-Unterbaugruppen sind an der Außenfläche der Wände befestigt, wobei jede Heizkissen-Unterbaugruppe neben einem entsprechenden Sensor angeordnet ist. Die Heizkissen-Unteranordnungen umfassen ein Kissen mit einer Befestigungsfläche, die mit der Außenfläche der Wände gekoppelt ist, und ein Heizelement, das mit dem Kissen gekoppelt ist. Eine Steuerung steht in elektrischer Verbindung mit den Heizelementen und den Sensoren. Diese Steuerung ist konfiguriert, Temperaturmessungen von jedem der Sensoren unabhängig zu überwachen und jedes der Heizelemente unabhängig zu steuern. Die Heizkissen-Unterbaugruppen sind auf der Außenseite der Vielzahl von Wänden positionierbar, und das Heizsystem kompensiert Belastungsschwankungen über die innere Heizkammer hinweg.

US 10 655 866 B2 offenbart ein Kochgerät, das in der Lage ist, mehrere Kochmaterialien unter Verwendung eines Wärmeübertragungsreglers zu kochen, der mehrere Bereiche aufweist, in denen ein Reflexionsvermögen gegenüber von einer Heizeinrichtung erzeugter Wärme variabel ist, und ein Steuerverfahren dafür. Gemäß einem Aspekt enthält ein Kochgerät mindestens eine Heizeinrichtung und einen Wärmeübertragungsregler, der so vorgesehen ist, dass er der mindestens einen Heizeinrichtung gegenüberliegt und mit einer Vielzahl von Bereichen versehen ist, die jeweils ein unterschiedliches Reflexionsvermögen gegenüber von der mindestens einen Heizeinrichtung erzeugter Wärme aufweisen eine Heizung.

EP 2 853 820 A1 offenbart eine Vorrichtung zum Garen von Lebensmitteln mit einem Gehäuse sowie einer oberen und einer unteren Heizplatte, wobei wenigstens eine Heizplatte, vorzugsweise die obere Heizplatte so in der Aufnahme befestigt ist, dass sie von einer ersten Stellung in eine zweite Stellung bewegt werden kann, wobei die beiden Heizplatten in der ersten Stellung parallel zueinander angeordnet sind und wobei der Vertikalabstand der Heizplatten in der zweiten Stellung zumindest abschnittsweise größer ist als in der ersten Stellung, wobei hinter der oberen Heizplatte und/oder der unteren Heizplatte eine Heizung und vorzugsweise eine Induktionsheizung angeordnet ist, die gemeinsam mit der dazugehörigen Heizplatte eine obere bzw. untere Heizeinheit oder einen Teil davon bildet. Die Erfindung betrifft ferner ein Küchenmöbel mit einer Aufnahme und einer darin angeordneten Vorrichtung zum Garen von Lebensmitteln, wobei die Aufnahme des Küchenmöbels mit dem Gehäuse der Vorrichtung verbunden ist oder das Gehäuse darstellt.

US 8 378 266 B2 offenbart ein Heizsystem und Verfahren zum Heizen einer Oberfläche, die in einer Form ein Substrat, das eine Heizoberfläche definiert, und ein geschichtetes Heizelement, das auf der Heizoberfläche ausgebildet ist, umfasst. Mehrere Knoten sind entlang der Heizfläche angeordnet und stehen in elektrischem Kontakt mit einer Widerstandsheizschicht des geschichteten Heizelements, zusammen mit mehreren Leitungsdrähten, die mit den mehreren Knoten verbunden sind. In einer Form kommuniziert ein Multiplexer mit der Vielzahl von Knoten durch die Vielzahl von Leitungsdrähten und eine Steuerung kommuniziert mit dem Multiplexer, wobei der Multiplexer Widerstände von der Vielzahl von Knoten sequenziert und an die Steuerung überträgt und die Steuerung eine Leistung steuert, die jedem der Vielzahl von Knoten bereitgestellt wird, basierend auf den Widerstandsunterschieden zwischen den Knoten.

CN 106 037 456 A offenbart einen Dampfgarer für Meeresfrüchte, aufweisend: ein Dampfschrankgehäuse mit einer Lufteinlassöffnung, einer Luftauslassöffnung und einem Bedienelement. Die Lufteinlassöffnung und die Luftauslassöffnung befinden sich an einer Seitenwand des Dampfschrankgehäuses, das Bedienelement befindet sich oberhalb des Dampfschrankgehäuses; eine mit dem Dampfgarer verbundene Dampferzeugungskammer zur Dampferzeugung und Dampfabgabe; ein Ansaugrohr, das über ein erstes Rohr mit der Ansaugöffnung verbunden ist, und dessen Dampfeinlass mit der Dampferzeugungskammer verbunden ist, um den von der Dampferzeugungskammer erzeugten Dampf über das erste Rohr zum Dampfgarer zu leiten; ein Luftauslassrohr, das über einen zweiten Kanal mit dem Luftauslass verbunden ist, und eine Dampfabsaugvorrichtung am Dampfauslass des Luftauslassrohrs. Wird das Bedienelement in den ersten Betriebszustand versetzt, schließt der erste Kanal den Lufteinlass, der zweite Kanal den Luftauslass, und eine Luftgebläseeinrichtung öffnet sich. Durch den Luftauslass strömt Luft in den Dampfgarer. Wird das Bedienelement in den zweiten Betriebszustand versetzt, schließt der erste Kanal den Lufteinlass, der zweite Kanal den Luftauslass, die Luftabsaugeinrichtung schließt sich und die Luftzufuhr zum Dampfgarer wird gestoppt.

FR 2 635 171 A1 offenbart ein Dampfgargerät, aufweisend eine Kombination zunächst eines hermetisch abgeschlossenen Gehäuses, das einen Deckel aufweist und im unteren Teil einen Wasserbehälter enthält, und mindestens zwei übereinander angeordnete Schubladen, die dicht schließen, in diesem Gehäuse gleiten und mit einem Rost oder einer nach unten geneigten, leicht erhöhten Platte ausgestattet sind, auf der das zu garende Essen angeordnet wird, wobei die Schubladen einerseits seitliche Perforationen für die Dampfzirkulation und andererseits mindestens eine Perforation an der Unterseite der Bodenwand oder Seitenwände aufweisen, die das Abfließen von Kondenswasser direkt in den Wasserbehälter ermöglicht, ohne dass es auf das darunter angeordnete Essen tropft, und schließlich einer Heizeinrichtung, die unter dem Wasserbehälter angeordnet ist und diesen auf der Siedetemperatur des Wassers hält.

CN 209 285 010 U1. Ein neuartiger Reisdampfschrank umfasst einen Schrankkörper, eine Heizvorrichtung und einen Wassertank, die auf dem Schrankkörper angeordnet sind, wobei der Schrankkörper außerdem mit einem gemeinsamen Dampfgarer, einem Dampfkorb und einem Formdampfgarer ausgestattet ist; eine erste Gleitgruppe und eine zweite Gleitgruppe sind im Schrankkörper angeordnet, und die erste Gleitgruppe ist mit dem Formdampfgarer abgestimmt. Die zweite Gleitgruppe ist mit dem gemeinsamen Dampfgarer abgestimmt; der Formdampfgarer ist mit einer Vielzahl paralleler Federstreifen ausgestattet, und zwischen den Federstreifen ist ein Spalt ausgebildet. Die innere Oberwand des Schrankkörpers ist mit einem Balken versehen, der Balken ist mit einer Vielzahl von Haken versehen, der Dampfkorb wird an den Haken gehängt und der Dampfkorb umfasst einen Korb. Der Korb ist mit einem Korbgriff versehen; die Verbindung des Korbgriffs mit dem Korb ist lösbar.

Es ist die **Aufgabe** der vorliegenden Erfindung, die Nachteile des Standes der Technik zumindest teilweise zu überwinden und insbesondere eine verbesserte Möglichkeit bereitstellt, Gargut in einer Dampfbehandlungsschublade zu behandeln.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Dampfgarschublade mit einem aus einem Schubladengehäuse aus- und einfahrbaren Schubfach, aufweisend
- einen mittels mindestens eines Raumteilers in mindestens zwei Teilräume unterteilbaren Garraum, der einen wannenförmigen, durch einen Deckel abdeckbaren Gargutbehälter aufweist,
- mindestens einen thermisch isolierenden Raumteiler, der dazu eingerichtet ist, den Garraum oder einen Teilraum davon dampfdicht in zwei Teilräume zu unterteilen,
- einen Nassdampferzeuger,
- einen Dampfzufuhrkanal, der dazu eingerichtet ist, von dem Nassdampferzeuger erzeugten Dampf in den Garraum zu leiten,
- mindestens einen Dampfablasskanal, der dazu eingerichtet ist, Dampf aus dem Garraum abzuleiten,
   wobei
- der Dampfzufuhrkanal dazu eingerichtet ist, den von dem Nassdampferzeuger erzeugten Dampf in jeden der Teilräume zu leiten, und ferner aufweisend
- mehrere Heizelemente, wobei jedem der möglichen Teilräume mindestens ein Heizelement zu seiner selektiven Beheizung zugeordnet ist,
   wobei
- die Dampfgarschublade dazu eingerichtet ist, abhängig von der Position des mindestens einen in den Gargutbehälter eingesetzten Raumteilers die zu den davon erzeugten Teilräumen gehörigen Heizelemente selektiv anzusteuern.

Diese Dampfgarschublade ergibt den Vorteil, dass der Garraum durch den mindestens einen Raumteiler von einem Nutzer nach Bedarf in zwei oder mehr Teil(gar)räume unterteilbar ist. Dies ermöglicht es verschiedene Speisen auf kleinem Raum gleichzeitig individuell mit Dampf zu behandeln. Durch die Dampfdichtigkeit der Raumteiler wird eine nicht nur räumliche, sondern auch atmosphärische Trennung der getrennten Teilräume erreicht, und damit eine gegenseitige geschmackliche Beeinflussung zwischen den Teilräumen verhindert. Außerdem lassen sich so unterschiedliche atmosphärische Bedingungen (z.B. in Bezug auf eine Luftfeuchte, Lufttemperatur, Strömungsgeschwindigkeit, usw.) in den Teilräumen konstruktiv einfach umsetzen. Darüber hinaus ist sind ein Energiebedarf und/oder ein Reinigungsaufwand geringer als bei Nutzung eines ungeteilten Garraums, und es ergibt sich auch eine schnellere Aufheizzeit. Da die Dampferzeugung für die Teilräume durch einen gemeinsamen Nassdampferzeuger erfolgt, ist die Dampfbehandlung zudem kostengünstig umsetzbar.

Außerdem wird der Vorteil erreicht, dass durch die selektiv ansteuerbaren Heizelemente die in die jeweiligen Teilräume eingebrachte Heizenergie angepasst werden kann, so dass insbesondere für jeden der Teilräume auf einfache Weise eine gewünschte Kombination aus Dampfkonzentration und Temperatur einstellbar ist. Dadurch wiederum lassen sich unterschiedliche Lebensmittel in unterschiedlichen Teilräumen vorteilhafterweise gezielt und insbesondere auch unabhängig voneinander mit Dampf und/oder Wärme behandeln.

Es ist eine Weiterbildung, dass die Dampfgarschublade eine Haushalts- Dampfgarschublade ist. Die Dampfgarschublade kann ein eigenständiges Gargerät oder Teil eines Kombinationsgeräts sein, z.B. ein Gargerät mit Ofen darunter angeordneter Dampfgarschublade.

Der Gargutbehälter und der darauf insbesondere dampfdicht aufgesetzte Deckel bilden den Garraum. Der Garraum ist dazu vorgesehen, Gargut aufzunehmen, mittels der Dampfgarschublade bei Bedarf mit Dampf beaufschlagt zu werden und/oder mittels mindestens eines Heizelement mit Heizenergie beaufschlagt zu werden. Der Gargutbehälter ist insbesondere aus der Schublade nutzerseitig entnehmbar.

Die - bei geschlossenem Garraum - zwei oder mehr Teilräume sind dampfdicht und damit atmosphärisch voneinander getrennt, d.h. dass, insbesondere während eines Dampfbehandlungsvorgangs kein Dampf zwischen ihnen ausgetauscht wird. Dass die beiden Teilräume dampfdicht voneinander getrennt sind, umfasst insbesondere auch, dass sie flüssigkeitsdicht voneinander getrennt sind.

Durch Einfügen eines Raumteilers kann ein mit Dampf beaufschlagbarer Raum (d.h., der Garraum oder einen Teilraum davon) in zwei jeweils mit Dampf beaufschlagbare Teilräume unterteilt werden, und zwar dampfdicht, so dass ein Austausch von Atmosphäre und ggf. auch Flüssigkeit (z.B. Kondensat) zwischen den beiden Teilräumen verhindert wird. Die beiden Teilräume können durch den Raumteiler also - bei geschlossenem Garraum - hermetisch, d.h., gas- und flüssigkeitstechnisch, voneinander getrennt werden. Dies kann so umgesetzt werden, dass zumindest der Garraum als Ganzes durch einen Raumteiler in einen ersten Teilraum und einen zweiten Teilraum unterteilt wird. Falls dazu eingerichtet, kann ein weiterer Raumteiler hinzugefügt werden, der den ersten Teilraum weiter in zwei Unter-Teilräume unterteilt, usw. Insgesamt lässt sich der Garraum durch n Raumteiler in n+1 voneinander dampfdicht getrennte Teilräume unterteilen.

Dadurch, dass der Raumteiler ein thermisch isolierenden Raumteiler ist, sind die Teilräume auch weitgehend thermisch voneinander getrennt, so dass in ihnen gezielt unterschiedliche Garraumtemperaturen eingestellt, insbesondere eingeregelt, werden können, und zwar auch mit höheren Temperaturunterschieden. Der Raumteiler kann beispielsweise dadurch thermisch isolierend ausgebildet sein, dass er aus einem thermisch schlecht leitenden Material, z.B. Kunststoff, ausreichender Dicke (z.B. von mindestens 2 mm bis 3 mm) besteht oder mit einem thermisch hochgradig isolierendem Material wie Luft oder Schaum gefüllt ist.

Auch kann der Gargutbehälter ein thermisch isoliert ausgebildeter Gargutbehälter sein. Dies kann beispielsweise dadurch umgesetzt sein, dass der Gargutbehälter aus Kunststoff besteht oder an seiner Außenseite von Dämmmaterial wie Dämmwolle oder Kunststoff bedeckt ist. Der Gargutbehälter kann alternativ oder zusätzlich doppelwandig ausgeführt sein und in dem Hohlraum z.B. Vakuum, Luft oder anderes thermisch besonders gut isolierendes Material wie Schaum usw. aufweisen.

Der Raumteiler ist insbesondere plattenförmig, insbesondere quaderförmig, ausgebildet und kann insbesondere auch dann als Trennwand bezeichnet werden.

Der in die Teilräume einbringbare Dampf wird insbesondere durch einen einzigen Nassdampferzeuger erzeugt, der außerhalb des Garraums angeordnet ist. Der Nassdampferzeuger erzeugt Nassdampf, d.h., bis zum Siedepunkt von Wasser aufheizbaren Dampf bzw. durch Sieden erzeugten Dampf. Dieser kann noch Wassertröpfchen enthalten und wird deshalb als "nass" bezeichnet.

Es ist eine Weiterbildung, dass dem Nassdampferzeuger mindestens ein SHS-Dampferhitzer nachgeschaltet ist, der dazu eingerichtet ist, den von dem Nassdampferzeuger erzeugten Nassdampf weiter in überhitzten Dampf umzuwandeln. Unter überhitztem Dampf kann insbesondere über den Siedepunkt von Wasser aufgeheizter Dampf verstanden werden, der auch als Trockendampf oder SHS, "Super Heated Steam" bekannt ist. Der überhitztem Dampf ist so heiß, dass er typischerweise keine Wassertröpfchen mehr aufweist und deshalb auch als "trocken bezeichnet wird. Eine Temperatur des Trockendampfs ist höher als die Siedetemperatur von Wasser und kann z.B. bis zu 200 °C, 300 °C, 400 °C, 500 °C, 600 °C oder sogar noch mehr betragen.

In einer Weiterbildung kann eine außerhalb des Garraums angeordnete Kombination aus Nassdampferzeuger und mindestens einem SHS-Dampferhitzer auch als (zweistufiger) Dampferzeuger bezeichnet oder angesehen werden, bei dem in einer ersten Stufe durch Sieden von Wasser Nassdampf erzeugt wird, der in einer zweiten Stufe in überhitzten Dampf umgewandelt wird.

Dass der Dampfzufuhrkanal dazu eingerichtet ist, von dem Nassdampferzeuger erzeugten Dampf (d.h., Nassdampf oder zusätzlich aufgeheizten überhitzen Dampf) in jeden der Teilräume zu leiten, umfasst insbesondere, dass der Dampfzufuhrkanal dazu eingerichtet sein kann, den Dampf grundsätzlich in jeden der Teilräume leiten zu können, insbesondere auch gleichzeitig. Dies schließt nicht aus, dass ggf. gezielt bzw. gesteuert mindestens einer der Teilräume während eines Garvorgangs nicht mit Dampf beaufschlagt wird, wobei aber die Dampfgarschublade dazu eingerichtet ist, jeden der Teilräume bei Bedarf mit Dampf zu beaufschlagen.

Dass der Dampfzufuhrkanal dazu eingerichtet ist, von dem Nassdampferzeuger erzeugten Dampf in jeden der Teilräume zu leiten, umfasst ferner, dass der Dampf direkt von dem Nassdampferzeuger in jeden der Teilräume geleitet wird und also nicht durch mehrere Teilräume hindurch.

Der in dem Garraum oder den Teilräumen befindliche Dampf (und ggf. Wrasen) kann - vor, während und/oder nach einem Garvorgang - durch den mindestens einen Dampfablasskanal aus dem Garraum bzw. den Teilräumen austreten. Der Dampfablasskanal kann beispielsweise zu einer Vorderseite bzw. vorderen Seitenwand der Dampfgarschublade und/oder zu einer Wrasenabzugsvorrichtung führen. Der Austritt bzw. Ablass des Dampfs aus dem Garraum kann durch einen erhöhten Dampfdruck in dem Garraum und/oder durch Absaugen, z.B. mittels eines Lüfters, bewirkt werden.

Allgemein kann der Garraum mit oder ohne Raumteiler zur Dampfbehandlung von darin untergebrachtem Gargut verwendet werden.

Mindestens ein Heizelement kann ein oder mehrere elektrische Widerstandsheizelemente (z.B. Heizschleifen) aufweisen. Mindestens ein Heizelement kann ein oder mehrere Induktionselemente aufweisen, die z.B. entsprechende Induktionsspulen aufweisen, welche in einem Metallvolumen einen Induktionsstrom erzeugen. Das Metallvolumen kann der Gargutbehälter sein. Mindestens ein Heizelement kann ein oder mehrere Infrarotstrahler aufweisen.

Dass jedem der möglichen Teilräume mindestens ein Heizelement zu seiner selektiven Beheizung zugeordnet ist, umfasst insbesondere, dass allen durch den mindestens einen Raumteiler (d.h., durch einen oder mehrere Raumteiler) erzeugbaren Teilräumen jeweils mindestens ein Heizelement zugeordnet ist, mittels dessen diese Teilräume individuell, d.h., unabhängig von den anderen Teilräumen beheizbar sind.

Dass die Dampfgarschublade dazu eingerichtet ist, abhängig von der Position des mindestens einen in den Gargutbehälter (tatsächlich) eingesetzten Raumteilers die zu den davon erzeugten Teilräumen gehörigen Heizelemente selektiv anzusteuern, umfasst insbesondere, dass die Dampfgarschublade die Position des mindestens einen in den Gargutbehälter (tatsächlich) eingesetzten Raumteilers erkennen kann und entsprechend - abhängig von den Vorgaben für den gewünschten Garablauf - die zu diesen Teilräumen gehörigen Heizelemente individuell für die einzelnen Teilräume ansteuern kann.

Die Ansteuerung der Heizelemente kann einen Betrieb der der Heizelemente zwischen 0 % und 100 % der maximal erlaubten Heizleistung umfassen.

Die Ansteuerung der Heizelemente kann bei elektrisch betriebenen Heizelementen ein Bestromen der Heizelemente umfassen.

Die Dampfgarschublade ist insbesondere dazu ausgebildet, die Heizelemente einerseits und die Dampferzeugung und Dampfeinleitung andererseits für jeden der Teilräume unabhängig voneinander zu steuern. Dadurch können die Teilräume wahlweise jeweils
- nur mit Dampf beaufschlagt werden, ohne dass auch die zugehörigen Heizelemente angesteuert bzw. aktiviert werden (reiner Dampfbehandlungsbetrieb);
- nicht mit Dampf beaufschlagt werden, sondern nur die zugehörigen Heizelemente angesteuert bzw. aktiviert werden (reiner Ofenbetrieb); oder
- mit Dampf beaufschlagt werden und zusätzlich (zeitgleich und/oder zeitlich versetzt) die zugehörigen Heizelemente angesteuert bzw. aktiviert werden (kombinierter Dampfbehandlungs- und Ofenbetrieb).
So wird der Vorteil erreicht, dass auch nur ein Teil des Gargutbehälters für einen Garbetrieb genutzt werden kann, was das Garergebnis verbessern kann, eine Aufheizzeit verkürzt und eine Energieeinsparung ergibt. Dies kann z.B. vorteilhaft sein, wenn ein Nutzer nur kleine Mengen an Gargut zubereiten möchte. Ein weiterer Vorteil besteht darin, dass in unterschiedlichen Teilräumen unabhängig voneinander unterschiedliche Garabläufe durchgeführt werden können. So kann in einem Teilraum z.B. Fisch mit Dampf ohne Nutzung der Heizelemente dampfgegart werden und in dem anderen Teilgarraum Beilagen nur mittels der Heizelemente gegart werden, z.B. bei 200°C.

Es ist eine Weiterbildung, dass dann, wenn kein Raumteiler eingesetzt ist, kann die Dampfgarschublade dazu ausgebildet ist, den durch den Gargutbehälters als Ganzes gebildeten Garraum wahlweise im reinen Dampfbehandlungsbetrieb, im reinen Ofenbetrieb oder kombinierter Dampfbehandlungs- und Ofenbetrieb zu betreiben.

Dass die Dampfgarschublade dazu eingerichtet ist, die Heizelemente selektiv anzusteuern, kann umfassen, dass eine Steuereinrichtung der Dampfgarschublade dazu eingerichtet ist, die Heizelemente selektiv anzusteuern. Die Steuereinrichtung kann auch die Funktion der Detektionseinrichtung aufweisen, d.h., auch als Detektionseinrichtung dienen. Diese Steuereinrichtung ist vorteilhafterweise dieselbe Steuereinrichtung, welche auch den Dampfbehandlungsbetrieb (Dampferzeugung und Dampfeinleitung) steuert.

Es ist eine Ausgestaltung, dass die Dampfgarschublade eine Detektionseinrichtung zum Erkennen einer Position des mindestens einen Raumteilers in dem Gargutbehälter aufweist und dazu eingerichtet ist, die zu den durch den mindestens einen Raumteiler erzeugten Teilräume gehörigen Heizelemente beruhend auf einer durch die Detektionseinrichtung erkannten Position des mindestens einen Raumteilers selektiv anzusteuern. So wird der Vorteil erreicht, dass die in die Heizelemente eingeprägte Leistung, insbesondere elektrische Leistung, und damit der Heizleistung auf besonders einfache Weise anpassbar ist.

Durch die Detektionseinrichtung kann in einer Weiterbildung außer der Position des mindestens einen Raumteilers optional auch dessen korrekter Sitz erkannt werden.

Es ist eine Ausgestaltung, dass die Detektionseinrichtung mehrere Schalter umfasst, welche zumindest im eingefahrenen Zustand der Dampfgarschublade durch den mindestens einen eingesetzten Raumteiler betätigbar sind, und dass die Dampfgarschublade dazu eingerichtet ist, die zu den durch den mindestens einen Raumteiler erzeugten Teilräume gehörigen Heizelemente beruhend auf einer Betätigung der Schalter selektiv anzusteuern. Diese Ausgestaltung ist vorteilhafterweise besonders preiswert umsetzbar. Es ist eine Weiterbildung, dass mindestens ein Schalter ein mechanischer Kontaktschalter, z.B. Mikroschalter, ist. Es ist eine Weiterbildung, dass mindestens ein Schalter ein elektrisches Kontaktelement ist. Es ist eine Weiterbildung, dass mindestens ein Schalter ein Hallsensor ist. Es ist eine Weiterbildung, dass mindestens ein Schalter eine Lichtschranke ist.

Es ist eine Weiterbildung, dass die Detektionseinrichtung eine Kamera umfasst, durch welche die Position des mindestens einen Raumteilers durch Bildauswertung in einem durch die Kamera aufgenommenen Bild ermittelt werden kann.

Es ist eine Ausgestaltung, dass die Schalter an allen möglichen Positionen des mindestens einen Raumteilers angeordnet sind.

Es ist eine Weiterbildung, dass zumindest an der frontseitigen bzw. vorderen Seitenwand und an der hinteren Seitenwand des Gargutbehälters Halterungen zum Einstecken mindestens eines Raumteilers, insbesondere einer Trennwand, vorhanden sind. So wird der Vorteil erreicht, dass bei Ansicht von vorne auf die vordere Seitenwand mindestens zwei nebeneinander angeordnete Teilräume bereitgestellt werden, welche besonders einfach individuell mit Dampf beaufschlagbar sind. Die Halterungen können in Front- bzw. Vorderansicht insbesondere hintereinander angeordnet sein, so dass die Raumteiler senkrecht zu der vorderen Seitenwand und der hinteren Seitenwand angeordnet werden können.

Es ist eine Weiterbildung, dass eine Halterung an jeder der Wände einen Einsteckschlitz aufweist. Dies ergibt den Vorteil, dass die Raumteiler durch einfaches Einstecken von oben in die Halterungen einsetzbar sind. Der Einsteckschlitz kann beispielsweise durch zwei vertikal ausgerichtete, nebeneinander angeordnete Rippen gebildet sein. Es ist eine Weiterbildung, dass an einem der beiden Einsteckschlitze oder an beiden Einsteckschlitzen ein Schalter vorhanden ist. Ist an beiden Einsteckschlitzen ein jeweiliger Schalter vorhanden, wird der Vorteil erreicht, dass so ein korrekter Sitz besonders einfach erkennbar ist.

Es ist eine Weiterbildung, dass alle Heizelemente einzeln mittels Schaltern ("Heizelementschalter") an eine Stromversorgung angeschlossen sind. Die Heizelementschalter können z.B. Relais oder elektronische Schalter wie Transistoren sein und dienen dazu, die jeweiligen Heizelemente wahlweise mit einer Stromversorgung zu verbinden oder davon zu trennen.

Es ist eine Ausgestaltung, dass zumindest ein Heizelement, insbesondere zumindest zwei Heizelemente, an dem Gargutbehälter angeordnet sind, insbesondere an einem Boden des Gargutbehälters.

Es ist eine Ausgestaltung, dass zumindest ein Heizelement, insbesondere zumindest zwei Heizelemente, an dem Deckel angeordnet sind.

Es ist eine Ausgestaltung, dass die selektive Ansteuerung eine Ansteuerung nur eines Teils der mindestens einem Teilraum zugeordneten Heizelemente und/oder ein Nichtansteuerung der mindestens einem Teilraum zugeordneten Heizelemente umfasst. So wird der Vorteil erreicht, dass sich eine eingebrachte Heizleistung besonders einfach einstellen lässt. Die Möglichkeit der Nichtansteuerung, bei keines der einem Teilraum zugeordneten Heizelemente angesteuert, insbesondere bestromt, wird, ergibt den Vorteil, dass dieser Teilraum gar nicht über die Heizelemente beheizt wird (sondern z.B. nur über den eingelassenen Dampf). Dies umfasst die Möglichkeit, keinen der Teilräume über die Heizelemente zu beheizen. Bei der Heizung nicht aller Teilräume durch Heizelemente ergibt sich der weitere Vorteil, dass die gesamte zum Ansteuern bzw. Betreiben der Heizelemente zur Verfügung stehende Energie bzw. elektrische Leistung in den mindestens einen durch Heizelemente zu heizenden Teilraum eingebracht werden kann, was zu deutlich schnelleren Aufheizzeiten in diesem Teilraum führt.

Es ist eine Ausgestaltung, dass die Heizelemente so ansteuerbar sind, dass eine Heizenergie, die von den Heizelementen in die jeweiligen Teilräume eingebracht wird, entsprechend einer Größe (Fläche und/oder Volumen) der Teilräume aufgeteilt ist. Unterteilt ein Raumteiler den Garraum beispielsweise in zwei Teilräume, von denen einen kleinerer Teilraum 30 % des gesamten Garraums einnimmt und der größere Teilraum 70 % des gesamten Garraums einnimmt, kann automatisch 30% der in den gesamten Garraum eingebrachten Heizenergie in den kleineren Teilraum eingebracht werden und 70% in den größeren Teilraum eingebracht werden. Grundsätzlich kann die in die einzelnen Teilräume eingebrachte Heizleistung jedoch im Rahmen der gesamt zur Verfügung stehenden Heizleistung frei je nach Bedarf aufgeteilt werden.

Es ist eine Ausgestaltung, dass der Dampfzufuhrkanal einen mit dem Nassdampferzeuger verbundenen Dampfeingang und mindestens eine Verzweigung mit mindestens zwei zu dem Garraum führenden Auslasszweigen aufweist. Dadurch wird der Vorteil erreicht, dass auf konstruktiv einfache Weise mehrere räumlich getrennte Dampfströme in den Garraum leitbar sind. Dies kann insbesondere vorteilhaft sein, um auch voneinander weiter auseinanderliegende Raumbereiche des Garraums mit hohen Dampfdurchsätzen zu beaufschlagen. Allgemein weist eine Verzweigung einen Einlasszweig und mindestens zwei davon verzweigende bzw. abgehende Auslasszweige auf. Dampf tritt in den Einlasszweig ein und kann grundsätzlich durch die Auslasszweige strömen.

Es ist eine Weiterbildung, dass mindestens zwei Verzweigungen strömungstechnisch hintereinander angeordnet sind, so dass an mindestens einen der Auslasszweige einer vorderen Verzweigung ein Einlasszweig einer strömungstechnisch folgenden Verzweigung anschließt. Dieser Verzweigungsaufbau kann grundsätzlich beliebig oft kaskadiert werden und ermöglicht eine konstruktiv einfache und einfach variierbare Bereitstellung von mehr als zwei Auslasszweigen.

Ist die Dampfgarschublade mit mindestens einen SHS-Dampferhitzer ausgerüstet, ist es eine Weiterbildung, dass ein SHS-Dampferhitzer strömungstechnisch vor der mindestens einen Verzweigung angeordnet ist, so dass auf besonders kostengünstige Weise überhitzter Dampf durch alle Verzweigungen strömen kann, wenn der SHS-Dampferhitzer betrieben wird. Es ist eine Weiterbildung, dass allen Auslasszweigen ein jeweiliger SHS-Dampferhitzer zugeordnet ist. So wird der Vorteil erreicht, dass für jeden der Auslasszweig individuell eingestellt werde kann, ob von ihm aus Nassdampf oder überhitzter Dampf in den Behandlungsraum bzw. einen zugehordneten Teilraum strömen soll. Es ist eine Weiterbildung, dass nur einer Teilmenge von Auslasszweigen ein SHS-Dampferhitzer zugeordnet ist. So lässt sich vorteilhafterweise auf immer noch kostengünstige Weise mindestens ein Teilraum nur mit Nassdampf beaufschlagen und mindestens ein weiterer Teilraum mit überhitztem Dampf oder wahlweise mit Nassdampf oder überhitztem Dampf.

Es ist eine Ausgestaltung, dass mindestens eine Verzweigung eine Stelleinrichtung aufweist, die ansteuerbar ist, um einen Dampfdurchsatz durch die Auslasszweige der zugehörigen Verzweigung variabel bzw. anteilig einzustellen. Dies ermöglicht es auf robuste und konstruktiv einfache Weise, den Dampfdurchsatz in mehrere Teilräume anteilig einzustellen und damit - insbesondere auch zusammen mit einer eingestellten Heizleistung des Nassdampferzeugers und ggf. des SHS-Dampferhitzers - eine Luftfeuchte / Luftfeuchtigkeit, Lufttemperatur und/oder Strömungsgeschwindigkeit gezielt für die jeweiligen Teilräume einzustellen. Die Stelleinrichtung ist insbesondere durch die Dampfgarschublade einstellbar, z.B. motorisch oder aktorisch. Die Stelleinrichtung ist insbesondere dazu eingerichtet, den Strömungsquerschnitt der Auslasszweige anteilig einzustellen.

Es ist eine Weiterbildung, dass die Stelleinrichtung eine elektrisch - insbesondere motoirisch oder aktorisch - einstellbare Klappe ist, insbesondere eine verschwenkbare Klappe, wobei eine Winkel- bzw. Schwenkstellung der Klappe die Strömungsquerschnitte der Auslasszweige bestimmt. Es ist eine Weiterbildung, dass die Verzweigung als Ventil ausgestaltet ist, insbesondere als Proportionalventil.

Grundsätzlich kann der Dampfzufuhrkanal jedoch auch mindestens eine Verzweigung aufweisen, die keine Stelleinrichtung aufweist, was vorteilhafterweise besonders kostengünstig umsetzbar ist.

Analog zu dem verzweigten Dampfzufuhrkanal kann auch ein Dampfablasskanal mindestens eine Verzweigung bzw. verzweigte Zusammenführung aufweisen, welche eine Stelleinrichtung aufweist, die ansteuerbar ist, um einen Dampfdurchsatz durch die dann mehreren Einlasszweige variabel bzw. anteilig einzustellen. Der dann insbesondere eine Auslasszweig kann beispielsweise mit einem Lüfter verbunden sein.

Es ist eine Ausgestaltung, dass mindestens eine Verzweigung genau zwei Auslasszweige aufweist. Dies ist besonders einfach mittels eines Y-Rohrs umsetzbar. Ist dieser Verzweigung eine Stelleinrichtung zugeordnet, lässt sich dies ebenfalls besonders einfach umsetzen, z.B. in Form eines Y-Ventils.

Es ist eine Ausgestaltung, dass der Dampfzufuhrkanal über (genau) eine Dampfeintritts- oder Dampfzufuhröffnung verfügt, welche in alle möglichen Teilräume mündet. Diese Ausgestaltung ist besonders einfach umsetzbar, da keine Verzweigung benötigt wird, sondern lediglich eine Aufweitung ("Verbreiterung") des Dampfzufuhrkanals. Die Aufteilung des Dampfdurchsatzes in die einzelnen Teilräume kann dann durch die - ggf. durch einen Nutzer manuell vorgenommene - Position bzw. Platzierung der Raumteiler hinter der Dampfzufuhröffnung eingestellt werden. Je nachdem, an welcher Position entlang der Breite der Dampfzufuhröffnung ein Raumteiler anschließt, desto mehr oder weniger Dampf gelangt in die dem Raumteiler zugeordneten Teilräume.

Es ist eine Ausgestaltung, dass der Gargutbehälter mindestens eine in einer Vorderseite bzw. in einer vorderen Seitenwand eingebrachte Dampfzufuhröffnung aufweist, durch welche aus dem Dampfzufuhrkanal ausströmender Dampf in den Gargutbehälter gelangen kann, und optional auch mindestens eine in einer hinteren Seitenwand eingebrachte Dampfaustritts- oder Dampfablassöffnung aufweist. So wird der Vorteil erreicht, dass auf konstruktiv einfache Weise ein gezielter Dampf/Luft-Strom durch den Garraum bzw. die Teilräume hindurch erzeugbar ist. Die mindestens eine Dampfzufuhröffnung des Gargutbehälters kann direkt oder über mindestens einen in den Gargutbehälter integrierten Aufsatzstutzen, dessen behandlungsraumseitige Mündung einer Dampfzufuhröffnung entspricht, an den Dampfzufuhrkanal anschließen.

Es ist eine Ausgestaltung, dass der Gargutbehälter an seiner frontseitigen bzw. vorderen Seitenwand mindestens zwei bei Frontansicht seitlich voneinander beabstandete Dampfzufuhröffnungen aufweist und die an der vorderen Seitenwand vorhandene mindestens eine Halterung zwischen den am weitesten voneinander beabstandeten (äußersten) Dampfzufuhröffnungen angeordnet ist. So wird vorteilhafterweise sichergestellt, dass auch die am weitesten links und rechts gebildeten Teilräume mit Dampf beaufschlagbar sind.

Es ist eine Ausgestaltung, dass der Gargutbehälter an seiner hinteren Seitenwand mindestens zwei bei Frontansicht seitlich voneinander beabstandete Dampfablassöffnungen aufweist und die an der hinteren Seitenwand vorhandene mindestens eine Halterung zwischen den am weitesten voneinander beabstandeten (äußersten) Dampfablassöffnungen angeordnet ist. So wird vorteilhafterweise sichergestellt, dass auch die am weitesten links und rechts gebildeten Teilräume mit Dampf beaufschlagbar sind. Dadurch wird vorteilhafterweise eine den Dampfzufuhröffnungen analoge Funktion bzw. Wirkung der Dampfablassöffnungen erreicht.

Es ist eine für den Fall, dass der Gargutbehälter an seiner vorderen Seitenwand mindestens zwei bei Frontansicht seitlich voneinander beabstandete Dampfzufuhröffnungen aufweist, besonders vorteilhafte Ausgestaltung, dass der Dampfzufuhrkanal genau eine Y-förmige Verzweigung mit genau zwei Auslasszweigen aufweist. Dies ist vorteilhafterweise besonders einfach umsetzbar, z.B. mittels eines einfachen Y-Ventils. Der Garraum kann dann durch einen Raumteiler in zwei individuell mit Dampf beaufschlagbare Teilräume unterteilt werden. Die beiden Auslasszweige führen zu einem jeweiligen Teilraum, falls ein Raumteiler in den Garraum eingesetzt worden ist. Insbesondere weist jeder der beiden Teilräume eine Dampfzufuhröffnung auf, vorteilhafterweise auch jeweils eine Dampfablassöffnung. Dadurch, dass die beiden Dampfzufuhröffnungen beidseitig der an der vorderen Seitenwand angebrachten mindestens einen Halterung angeordnet sind, wird sichergestellt, dass sich die beiden Teilräume unabhängig von der Position des Raumteilers mit Dampf beaufschlagen lassen, und zwar auch dann, wenn der Raumteiler an mehreren unterschiedlichen Halterungen und damit Positionen anordenbar ist.

Es ist eine Ausgestaltung, dass der mindestens eine Dampfablasskanal genau ein - verzweigter oder unverzweigter - Dampfablasskanal ist. Dies ist vorteilhafterweise besonders einfach umsetzbar. Der mindestens eine Dampfablasskanal weist insbesondere genau ein Dampfablassende auf. Ist genau ein unverzweigter Dampfablasskanal vorhanden, kann dieser über (genau) eine Dampfablassöffnung verfügt, welche in alle möglichen Teilräume mündet. Diese Ausgestaltung ist besonders einfach umsetzbar, da keine Verzweigung benötigt wird, sondern lediglich eine Aufweitung ("Verbreiterung") des Dampfzufuhrkanals. Die Aufteilung des Dampfdurchsatzes in den Dampfablasskanal kann dann durch die - ggf. durch einen Nutzer manuell vorgenommene - Position bzw. Platzierung der Raumteiler vor der Dampfablassöffnung eingestellt werden. Je nachdem, an welcher Position entlang der Breite der Dampfablassöffnung ein Raumteiler anschließt, desto mehr oder weniger Dampf wird aus den dem Raumteiler zugeordneten Teilräume abgelassen. Es ist eine Weiterbildung, dass der Raumteiler, insbesondere die Trennwand, umlaufend, d.h., an allen Randabschnitten, eine Dichtung aufweist. Dadurch wird vorteilhafterweise ein Austausch von Luft, Dampf, Kondensat usw. zwischen den davon abgetrennten Teilräumen besonders effektiv unterbunden. Für den Fall eines wannenförmigen, mittels eines Deckel abdeckbaren Gargutbehälters kann eine plattenförmige Trennwand z.B. mit ihrem unteren Randabschnitt auf dem Boden des Gargutbehälters an- bzw. aufliegen, mit den seitlichen Randabschnitten an der vorderen Seitenwand bzw. der hinteren Seitenwand aufliegen und mit dem oberen Randabschnitt an dem Deckel aufliegen. Die Dichtung kann z.B. aus Gummi, Kunststoff, Keramik, usw. bestehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Draufsicht eine Skizze eines Schubfachs einer Dampfgarschublade;
- Fig.2: zeigt eine Skizze einer Verzweigung eines Dampfzufuhrkanals des Schubfachs;
- Fig.3: zeigt die Dampfgarschublade in einer Ansicht von schräg vorne;
- Fig.4: zeigt die Dampfgarschublade in einer Ansicht von schräg hinten;
- Fig.5: zeigt in Draufsicht eine mögliche Anordnung von Heizelementen an einem Boden eines Gargutbehälters der Dampfgarschublade;
- Fig.6: zeigt in einer zu Fig.4 analogen Ansicht eine mögliche Anordnung von Heizelementen an einem Deckel der Dampfgarschublade.

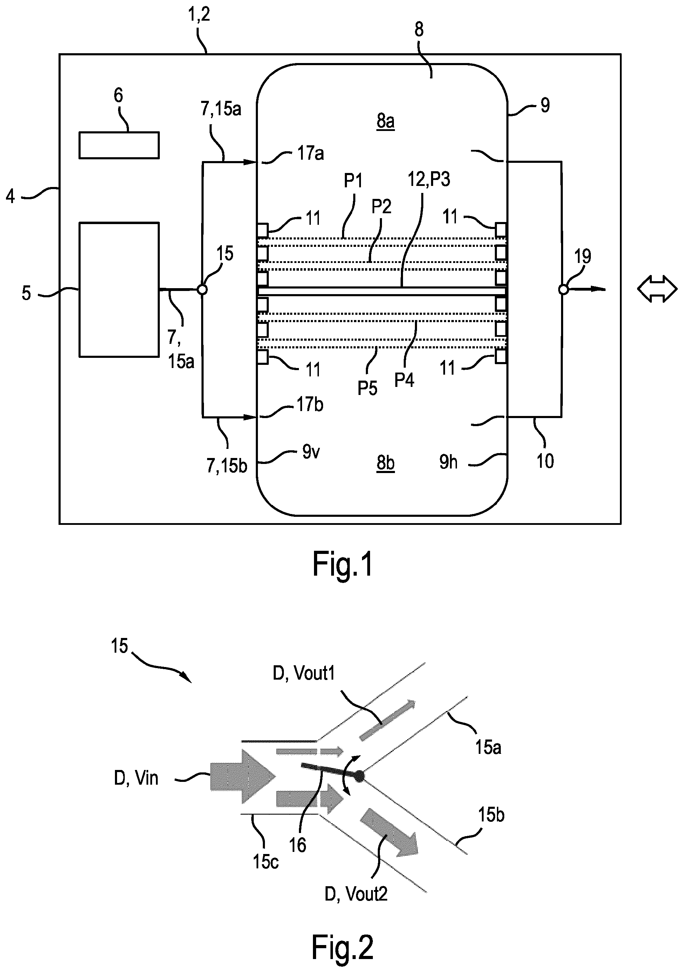

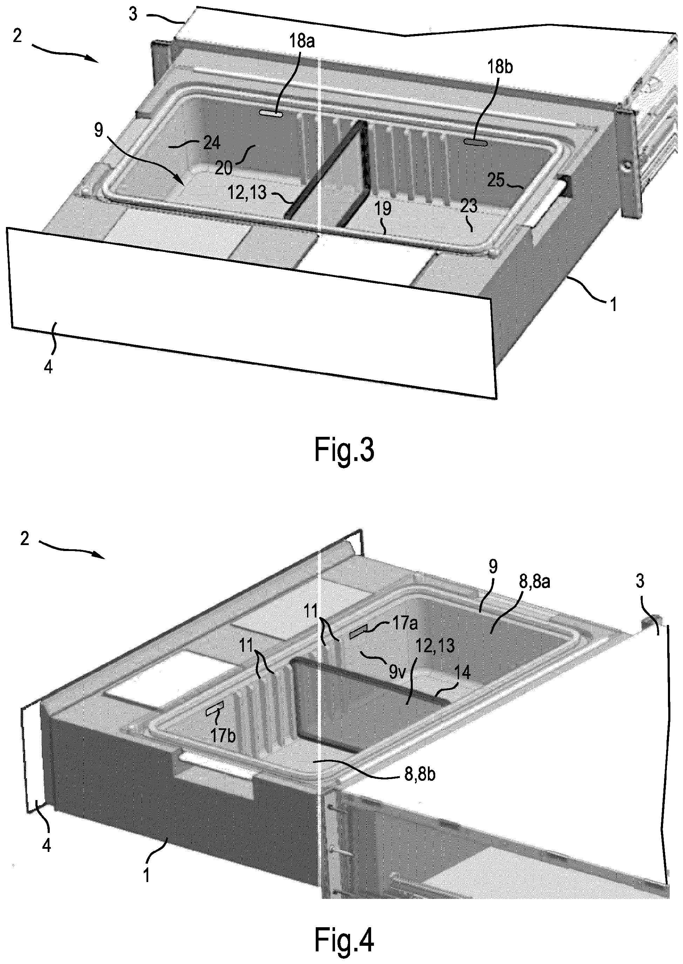

**Fig.1** zeigt in Draufsicht eine Skizze eines Schubfachs 1 einer Dampfgarschublade 2. Das Schubfach 1 ist horizontal in ein Schubladengehäuse 3 (siehe Fig.3 und Fig.4) ein- und ausfahrbar, wie durch den Doppelpfeil angedeutet, wobei im eingefahrenen Zustand eine Frontplatte 4 des Schubfachs 1 die frontseitige Öffnung des Schubladengehäuses 3 abschließt.

Das Schubfach 1 weist einen elektrisch betriebenen Nassdampferzeuger 5 auf, der dazu eingerichtet ist Wasser zum Sieden zu bringen, um Nassdampf D zu erzeugen. Der Nassdampferzeuger 5 ist mittels einer Steuereinrichtung 6 steuerbar, z.B. ein- und ausschaltbar. Insbesondere kann mittels der Steuereinrichtung 6 eine Heizleistung des Nassdampferzeugers 5 eingestellt werden, wodurch wiederum ein Volumen pro Zeiteinheit des erzeugten Nassdampfs D einstellbar ist. Dem Nassdampferzeuger 5 kann optional mindestens ein SHS-Dampferhitzer nachgeschaltet sein (o. Abb.).

An einem Dampfausgang des Nassdampferzeugers 5 ist ein Dampfzufuhrkanal 7 angeschlossen, der dazu eingerichtet ist, den von dem Nassdampferzeuger 5 erzeugten Nassdampf 5 oder - bei Vorhandensein eines SHS-Dampferhitzers - überhitzten Dampf in einen Garraum 8 zu leiten. Der Garraum 8 wird hier mittels eines wannenförmigen, oberseitig offenen Gargutbehälters 9 sowie eines auf den Gargutbehälter 9 dampfdicht aufsetzbaren Deckels (o. Abb.), z.B. aus Glas, gebildet. Der Gargutbehälter 9 ist insbesondere nutzerseitig entnehmbar. Er dient zur Aufnahme von Gargut, ggf. in Gargutbehältern wie GN-Behältern usw.

Ferner ist der Garraum 8 an einen Dampfablasskanal 10 anschließbar bzw. im eingesetzten Zustand angeschlossen, der dazu eingerichtet ist, Dampf aus dem Garraum 8 abzuleiten, z.B. in die Umgebung oder zu einem Wrasenabzugssystem (o. Abb.).

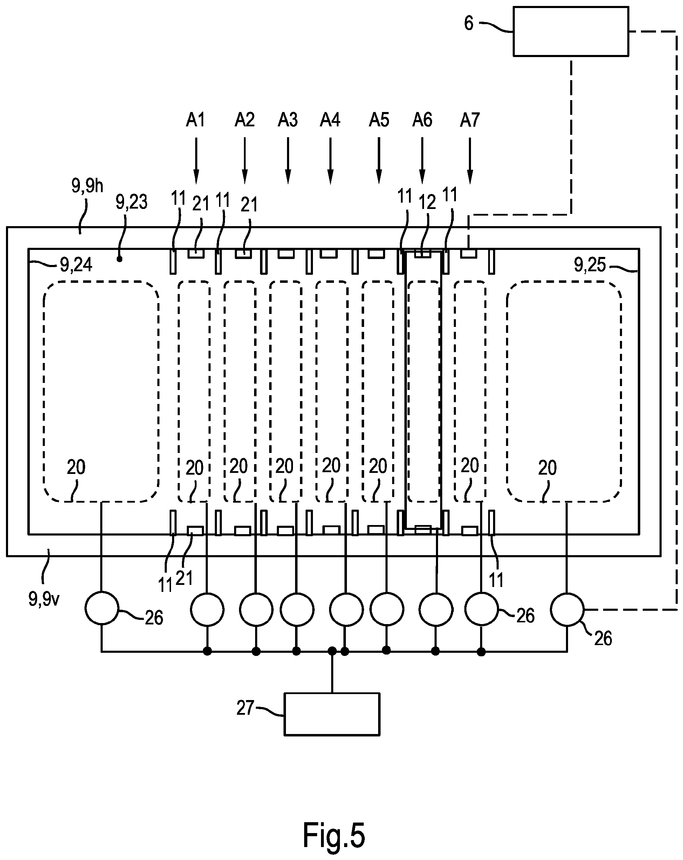

Der Gargutbehälter 9 weist innenseitig an seiner Vorderseite bzw. vorderen Seitenwand 9v und in Frontansicht an gleicher Stelle an seiner Rückseite bzw. hinteren Seitenwand 9h jeweils mehrere parallel zueinander angeordnete, vertikal ausgerichtete Rippen 11 auf, nämlich hier neun parallel zueinander angeordnete Paare aus vorderseitigen und rückseitigen Rippen 11, die Steckplätze für die Trennwand 12 definieren (siehe Fig.5). Zwischen benachbarte Rippenpaare ist bei abgenommenem oder geöffnetem Deckel einen Raumteiler in Form einer plattenförmige Trennwand 12 mit rechteckiger Grundform nutzerseitig einsteckbar und auch wieder aussteckbar. Benachbarte Rippenpaare bilden somit eine Halterung für die Trennwand 12. Durch die vorliegend beispielhaft sechs Rippenpaare lässt sich die Trennwand 12 wahlweise in einer von fünf Positionen P1 bis P5 anordnen.

Ein Rand der Trennwand 12 ist umlaufend mit einer Dichtung 13 (siehe Fig.3 und Fig.4) versehen, die z.B. aus Gummi, Kunststoff, Keramik, usw. bestehen kann. Die Trennwand 12 kann optional speziell thermisch isolierend ausgebildet sein und/oder kann optional mindestens ein elektrisches Heizelement 14 aufweisen.

Bei eingesetzter Trennwand 12 und aufgesetztem Deckel ist der Garraum 8 in zwei voneinander dampfdicht (und damit insbesondere auch flüssigkeitsdicht) voneinander getrennte Teilräume 8a und 8b unterteilt. Durch die unterschiedlichen Positionen P1 bis P5 lassen sich die anteiligen Volumina der Teilräume 8a und 8b einstellen.

Der Dampfzufuhrkanal 7 ist so ausgestaltet, dass der von dem Nassdampferzeuger 5 erzeugte Dampf D - ggf. nach Umwandlung in überhitzen Dampf - sowohl in den ersten Teilraum 8a als auch in den zweiten Teilraum 8b geleitet wird. Der Dampfzufuhrkanal 7 weist dazu hier eine Y-förmige Verzweigung in Form eines Y-Ventils 15 auf, das genauer in **Fig.2** gezeigt ist. Das Y-Ventil 15 weist einen mit der Dampfseite des Nassdampferzeugers 5 verbundenen (Dampf-)Einlasszweig 15c und zwei davon abzweigende, symmetrisch ausgebildete (Dampf-)Auslasszweige 15a und 15b auf. Die Auslasszweige 15a und 15b verzweigen bzw. führen zu dem ersten Teilraum 8a bzw. zu dem zweiten Teilraum 8b.

Das Y-Ventil 15 verfügt über eine Stelleinrichtung in Form einer durch die Steuereinrichtung 6 elektrisch ansteuerbaren verschwenkbaren Ventilklappe 16. Durch Einstellung des Schwenkwinkels der Ventilklappe 16 lässt sich der Dampfdurchsatz Vin des durch den Einlasszweig 15c einströmenden Dampfs D variabel in einen Dampfdurchsatz Vout1 durch den Auslasszweig 15a und einen Dampfdurchsatz Vout2 durch den Auslasszweig 15b einstellen, wobei Vin = Vout1 + Vout2 gilt. Insbesondere kann Vout1 in einem Bereich [0 %, ..., 100 %] · Vin eingestellt werden. Damit kann folglich auch der in die Teilräume 8a bzw. 8b einströmende Volumenstrom des Dampfs D anteilig eingestellt werden, während Vin durch die in das Heizelement des Nassdampferzeugers 5 eingeprägte elektrische Leistung gezielt variierbar ist.

Die Auslasszweige 15a und 15b verzweigen bzw. führen zu in die vordere Seitenwand 9v des Gargutbehälters 9 eingebrachte Dampfzufuhröffnungen 17a bzw. 17b, welche in die Teilräume 8a bzw. 8b führen. Ist der Gargutbehälter 9 nicht entnehmbar, können die Dampfzufuhröffnungen 17a bzw. 17b direkt den Mündungen der Auslasszweige 15a und 15b entsprechen. Ist der Gargutbehälter 9 entnehmbar, können die Dampfzufuhröffnungen 17a und 17b in einer Weiterbildung einfache Durchbrüche sein, die an die fest in dem Schubfach 1 angeordneten Abschnitte der Auslasszweige 15a bzw. 15b anschließen, und können in einer anderen Weiterbnildung Mündungen stutzenförmiger Kanalabschnitte des Gargutbehälters 9 sein, welche in die in dem Schubfach 1 angeordneten Abschnitte der Auslasszweige 15a bzw. 15b einsteckbar sind, insbesondere dampfdicht.

Die Dampfzufuhröffnungen 17a und 17b sind in Frontansicht so weit seitlich voneinander beabstandet, dass die Rippen 11 zwischen ihnen angeordnet sind. Dadurch wird sichergestellt, dass jeder der Teilräume 8a und 8b mit Dampf durch die Dampfzufuhröffnungen 17a bzw. 17b beaufschlagbar ist, und zwar unabhängig von der Position P1 bis P5 der Trennwand 12.

Analog zu den Dampfzufuhröffnungen 17a und 17b und in Frontansicht vorteilhafterwiese an gleicher Stelle weist der Gargutbehälter 9 an seiner hinteren Seitenwand 9b zwei Dampfablassöffnungen 18a und 18b, durch welche Dampf bzw. eine Dampf-/Luft- /Wrasen-Gemisch aus dem jeweiligen Teilraum 8a bzw. 8b austreten und in den Dampfablasskanal 10 strömen kann. Auch die Dampfablassöffnungen 18a und 18b sind in Frontansicht so weit seitlich voneinander beabstandet, dass die an der hinteren Seitenwand 9b angeordneten Rippen 11 zwischen ihnen angeordnet sind. Der Dampfablasskanal 10 weist eine Zusammenführung 19 auf, an der die an die beiden Dampfablassöffnungen 18a und 18b anschließenden Zweige zusammenlaufen. Insbesondere kann der Dampfablasskanal 10 eine zu Fig.2 umgekehrte Verzweigung bzw. Zusammenführung 19 mit zwei Einlasszweigen und einem Auslasszweig aufweisen, deren Strömungsquerschnitt z.B. durch eine Ventilklappe 16 einstellbar ist.

**Fig.5** zeigt in Draufsicht eine mögliche Anordnung von Heizelementen 20 an eines Gargutbehälters, der beispielhaft analog zu dem Gargutbehälters 9 ausgebildet ist. An einer Innenseite der vorderen Seitenwand 9v und einer hinteren Seitenwand 9h des Gargutbehälters 9 sind hier rein beispielhaft acht Paare von vorderen bzw. hinteren Rippen 11 vorhanden, die sieben Steckplätze A1 bis A7 definieren. In Steckplatz A6 ist die Trennwand 12 eingesteckt.

Zwischen jeweiligen zwei benachbarten Rippen 11 jeder der Seitenwände 9v und 9h befinden sich Schalter 21 (z.B. Kontaktelemente) einer Detektionsvorrichtung, welche bei Einsatz der Trennwand 12 schalten. Die Schalter 21 sind mit der Steuereinrichtung 6 verbunden, welche einen Schaltzustand der Schalter 21 überwacht.

Die Heizelemente 20 sind an einem Boden 23 des Gargutbehälters 9 eingelassen und können beispielsweise elektrische Widerstandsheizelemente wie Dickschichtheizleiter usw. oder Induktionsspulen sein. Jedem der möglichen Teilräume ist hier ein Heizelement 20 zugeordnet. Die möglichen Teilräume umfassen hier den zu der Fläche von der linken Seitenwand 24 bis zu der nächsten Rippe 11 gehörigen Raum, die zu den Steckplätzen A1 bis A7 gehörigen Räume und den von der letzten Rippe 11 bis zu der rechten Seitenwand 25 gehörigen Raum.

Jedes der Heizelemente 20 ist über einen Schalter 26 (z.B. eine Transistor oder ein Relais) mit einer Stromversorgung 27 verbunden, wobei die Schalter 26 zu Ihrer Ansteuerung (offen / geschlossen) mit der Steuereinrichtung 6 verbunden sind. Die Steuereinrichtung 6 ist dazu eingerichtet, die Schalter 26 abhängig von der durch die Schalter 21 erkannten Position der Trennwand (hier: in Steckplatz A6) zu schalten. Die Steuereinrichtung 6 ist ferner dazu eingerichtet, die Schalter 26 selektiv bzw. individuell zu schalten, insbesondere abhängig von einer durch die Position der Trennwand 12 tatsächlich erzeugten Aufteilung in Teilräume gewünschten Heizleistung zu schalten. Die tatsächlich erzeugten Teilräume sind hier ein linker Teilraum, der von der linken Seitenwand 24 bis einschließlich zu dem fünften Steckplatz A5 reicht, und ein rechter Teilraum, der von dem siebten Steckplatz A7 bis zu der rechten Seitenwand 25 reicht.

Soll beispielsweise der linke Teilraum durch Heizelemente 20 geheizt werden, können alle in dessen Fläche liegenden Heizelemente 20 oder auch nur eines oder einige davon bestromt werden. Soll beispielsweise der rechte Teilraum durch Heizelemente 20 geheizt werden, können alle in dessen Fläche liegenden Heizelemente 20 oder auch nur eines oder einige davon bestromt werden. So lässt sich vorteilhafterweise erreichen, dass die Heizleistung automatisch auf die zwei Teilgarräume entsprechend ihrer Flächenaufteilung aufgeteilt wird. Das in dem Steckplatz A6 liegende Heizelement 20 ist vorteilhafterweise durch den zugehörigen Schalter 26 von der Stromversorgung 27 abgetrennt.

Es ist auch möglich, nur einen oder keinen der tatsächlich erzeugten Teilräume mittels Heizelementen 20 zu heizen, wozu die zugehörigen Schalter 26 dann vorteilhafterweise geöffnet sind.

Ferner kann auch die Stromversorgung 27 von der Steuereinrichtung 6 angesteuert werden, z.B. um eine davon ausgegebene elektrische Leistung einzustellen.

Die Steuereinrichtung 6 kann also dazu ausgebildet sein, wahlweise den linken Teilraum und unabhängig davon den rechten Teilraum jeweils
- nur mit Dampf zu beaufschlagen, ohne auch die zugehörigen Heizelemente 20 zu bestromen (reiner Dampfbehandlungsbetrieb);
- nicht mit Dampf zu beaufschlagen, sondern nur die zugehörigen Heizelemente 20 zu bestromen (reiner Ofenbetrieb); oder
- mit Dampf zu beaufschlagen und zusätzlich (zeitgleich und/oder zeitlich versetzt) die zugehörigen Heizelemente 20 zu bestromen (kombinierter Dampfbehandlungs- und Ofenbetrieb).

Ist keine Trennwand 12 eingesetzt, kann die Steuereinrichtung 6 dazu ausgebildet sein, den durch den Gargutbehälters 9 als Ganzes gebildeten Garraum wahlweise im reinen Dampfbehandlungsbetrieb, im reinen Ofenbetrieb oder kombinierter Dampfbehandlungs- und Ofenbetrieb zu betreiben.

In einem alternativen, nicht dargestellten Ausführungsbeispiel können die Heizelemente 20 einzeln an die Stromversorgung 27 angeschlossen sein und individuell bestrombar sein, so dass auch der in die einzelnen Heizelemente eingeprägte Heizstrom individuell einstellbar ist.

In einem alternativen, nicht dargestellten Ausführungsbeispiel können pro möglichem Teilraum auch mehrere Heizelemente 20 vorhanden sein. Die die möglichen Teilräume individuell heizenden Heizelemente 20 können dann zumindest gruppenweise durch die Steuereinrichtung 6 ansteuerbar sind. Optional können diese Heizelemente 20 auch einzeln ansteuerbar sein, was eine besonders variable Einbringung von Heizleistung ermöglicht.

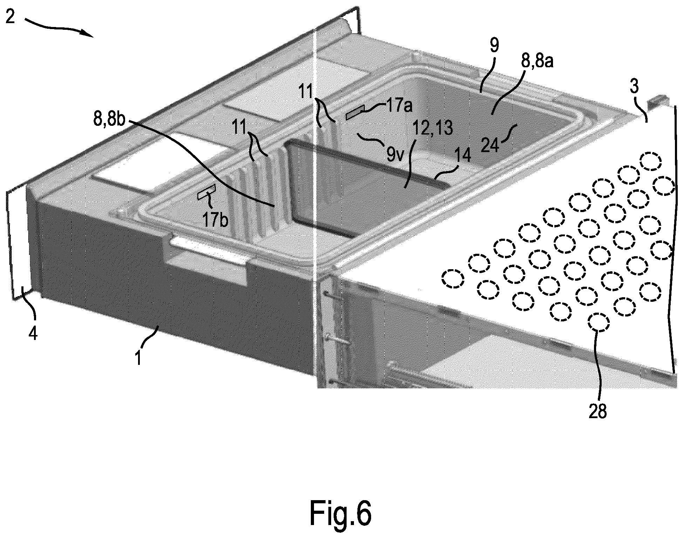

Fig.6 zeigt in einer zu Fig.4 analogen Ansicht eine mögliche Anordnung von Heizelementen 28 an einem Deckel (o. Abb.) der Dampfgarschublade 2. Die Heizelemente 28 können alternativ oder zusätzlich zu den Heizelementen 20 vorhanden sein. Der Deckel kann in dem Schubladengehäuse 3 integriert sein, z.B. unterhalb einer Decke des Schubladengehäuses 3 angebracht sein. Vorliegend sind die Heizelemente 28 beispielhaft in einer Matrixform angeordnet, wobei die möglichen Teilräume individuell heizenden Heizelemente 28 zumindest reihenweise durch die Steuereinrichtung 6 ansteuerbar sind. Optional können die Heizelemente 28 auch einzeln ansteuerbar sein, was eine besonders variable Einbringung von Heizleistung ermöglicht. Dazu können die Reihen von Heizelementen 28 oder sogar die einzelnen Heizelemente 28 analog zu Fig.5 durch Schalter 26 wahlweise aktivierbar und deaktivierbar sein.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Schubfach
- 2: Dampfgarschublade
- 3: Schubladengehäuse
- 4: Frontplatte
- 5: Nassdampferzeuger
- 6: Steuereinrichtung
- 7: Dampfzufuhrkanal
- 8: Garraum
- 8a: Erster Teilraum des Garraums
- 8b: Zweiter Teilraum des Garraums
- 9: Gargutbehälter
- 9v: Vordere Seitenwand des Gargutbehälters
- 9h: Hintere Seitenwand des Gargutbehälters
- 10: Dampfablasskanal
- 11: Rippe
- 12: Trennwand
- 13: Dichtung
- 14: Elektrisches Heizelement
- 15: Y-Ventil
- 15a: Erster Auslasszweig des Y-Ventils
- 15b: Zweiter Auslasszweig des Y-Ventils
- 15c: Einlasszweig des Y-Ventils
- 16: Ventilklappe
- 17a: Dampfzufuhröffnung
- 17b: Dampfzufuhröffnung
- 18a: Dampfablassöffnung
- 18b: Dampfablassöffnung
- 19: Zusammenführung
- 20: Heizelement
- 21: Schalter
- 23: Boden des Gargutbehälters
- 24: Linke Seitenwand des Gargutbehälters
- 25: Rechte Seitenwand des Gargutbehälters
- 26: Schalter
- 27: Stromversorgung
- 28: Heizelement
- A1-A7: Steckplätze
- D: Nassdampf
- P1-P5: Position der Trennwand
- Vin: Dampfdurchsatz in das Y-Ventil
- Vout1: Dampfdurchsatz durch den ersten Auslasszweig
- Vout2: Dampfdurchsatz durch den zweiten Auslasszweig

## Patentansprüche

1. Dampfgarschublade (2), insbesondere Haushalts-Dampfgarschublade (2), mit einem aus einem Schubladengehäuse (3) aus- und einfahrbaren Schubfach (1), aufweisend
- einen mittels mindestens eines Raumteilers (12) in mindestens zwei Teilräume (8a, 8b) unterteilbaren Garraum (8), der einen wannenförmigen, durch einen Deckel abdeckbaren Gargutbehälter (9) aufweist,
- mindestens einen thermisch isolierenden Raumteiler (12), der dazu eingerichtet ist, den Garraum (8) oder einen Teilraum (8a, 8b) davon dampfdicht in zwei Teilräume (8a, 8b) zu unterteilen,
- einen Nassdampferzeuger (5),
- einen Dampfzufuhrkanal (7), der dazu eingerichtet ist, von dem Nassdampferzeuger (5) erzeugten Dampf (D) in den Garraum (8) zu leiten,
- mindestens einen Dampfablasskanal (10), der dazu eingerichtet ist, Dampf (D) aus dem Garraum (8) abzuleiten,
wobei
- der Dampfzufuhrkanal (7) dazu eingerichtet ist, den von dem Nassdampferzeuger (5) erzeugten Dampf (D) in jeden der Teilräume (8a, 8b) zu leiten,
und ferner aufweisend
- mehrere Heizelemente (20, 28), wobei jedem der möglichen Teilräume (8a, 8b) mindestens ein Heizelement (20, 28) zu seiner selektiven Beheizung zugeordnet ist,
wobei
- die Dampfgarschublade (2) dazu eingerichtet ist, abhängig von der Position des mindestens einen in den Gargutbehälter (9) eingesetzten Raumteilers (12) die zu den davon erzeugten Teilräumen (8a, 8b) gehörigen Heizelemente (20, 28) selektiv anzusteuern.

2. Dampfgarschublade (2) nach Anspruch 1, wobei die Dampfgarschublade (2) eine Detektionseinrichtung (6, 21) zum Erkennen einer Position des mindestens einen Raumteilers (12) in dem Gargutbehälter (9) aufweist und dazu eingerichtet ist, die zu den durch den mindestens einen Raumteiler (12) erzeugten Teilräume (8a, 8b) gehörigen Heizelemente (20, 28) beruhend auf einer durch die Detektionseinrichtung (6, 21) erkannten Position des mindestens einen Raumteilers (12) selektiv anzusteuern.

3. Dampfgarschublade (2) nach Anspruch 2, wobei die Detektionseinrichtung (6, 21) mehrere Schalter (21) umfasst, welche zumindest im eingefahrenen Zustand der Dampfgarschublade (2) mechanisch durch den mindestens einen eingesetzten Raumteiler (12) betätigbar sind, und wobei die Dampfgarschublade (2) dazu eingerichtet ist, die zu den durch den mindestens einen Raumteiler (12) erzeugten Teilräume (8a, 8b) gehörigen Heizelemente (20, 28) beruhend auf einer Betätigung der Schalter (21) selektiv anzusteuern.

4. Dampfgarschublade (2) nach Anspruch 3, wobei die Schalter (21) an möglichen Positionen des mindestens einen Raumteilers angeordnet sind.

5. Dampfgarschublade (2) nach einem der vorhergehenden Ansprüche, wobei zumindest zwei Heizelemente (20) an dem Gargutbehälter (9) angeordnet sind, insbesondere an einem Boden (23) des Gargutbehälters (9).

6. Dampfgarschublade (2) nach einem der vorhergehenden Ansprüche, wobei zumindest zwei Heizelemente (28) an dem Deckel angeordnet sind.

7. Dampfgarschublade (2) nach einem der vorhergehenden Ansprüche, wobei die selektive Ansteuerung ein Ansteuerung nur eines Teils der mindestens einem Teilraum (8a, 8b) zugeordneten Heizelemente (20, 28) und/oder ein Nichtansteuerung der mindestens einem Teilraum (8a, 8b) zugeordneten Heizelemente (20, 28) umfasst.

8. Dampfgarschublade (2) nach einem der vorhergehenden Ansprüche, wobei die Heizelemente (20, 28) so ansteuerbar sind, dass eine Heizenergie, die von den Heizelementen (20, 28) in die jeweiligen Teilräume (8a, 8b) eingebracht wird, entsprechend einer Fläche der Teilräume (8a, 8b) aufgeteilt ist.

9. Dampfgarschublade (2) nach einem der vorhergehenden Ansprüche, wobei der Dampfzufuhrkanal (7)
- einen mit dem Nassdampferzeuger (5) verbundenen Dampfeingang (15c) und mindestens eine Verzweigung (15) mit mindestens zwei zu dem Garraum (8) führenden Auslasszweigen (15a, 15b) aufweist und
- mindestens eine Verzweigung (15) eine Stelleinrichtung (16) aufweist, die ansteuerbar ist, um einen Dampfdurchsatz (Vout1, Vout2) durch die Auslasszweige (15a, 15b) anteilig einzustellen.

10. Dampfgarschublade (2) nach Anspruch 9, wobei mindestens eine Verzweigung (15) genau zwei Auslasszweige (15a, 15b) aufweist.

11. Dampfgarschublade (2) nach einem der vorhergehenden Ansprüche, wobei der Dampfzufuhrkanal (7) über eine Dampfablassöffnung verfügt, welche in alle möglichen Teilräume (8a, 8b) mündet.

12. Dampfgarschublade (2) nach einem der vorhergehenden Ansprüche, wobei der Gargutbehälter (9)
- mindestens eine in einer vorderen Seitenwand (9v) eingebrachte Dampfzufuhröffnung (17a, 17b) aufweist, durch welche aus dem Dampfzufuhrkanal (7) ausströmender Dampf (D) in den Gargutbehälter (9) strömen kann, und
- mindestens eine in einer hinteren Seitenwand (9h) eingebrachte Dampfablassöffnung (18a, 18b) aufweist.

13. Dampfgarschublade (2) nach Anspruch 12, wobei zumindest an der vorderen Seitenwand (9v) und an der hinteren Seitenwand (9h) des Gargutbehälters (9) Halterungen (11) zum Einstecken mindestens eines Raumteilers (12) vorhanden sind, wobei
- der Gargutbehälter (9) an seiner vorderen Seitenwand (9v) mindestens zwei seitlich voneinander beabstandete Dampfzufuhröffnungen (17a, 17b) aufweist,
- die an der vorderen Seitenwand (9v) vorhandene mindestens eine Halterung (11) zwischen den am weitesten voneinander beabstandeten Dampfzufuhröffnungen (17a, 17b) angeordnet ist,
- der Gargutbehälter (9) an seiner hinteren Seitenwand (9h) mindestens zwei seitlich voneinander beabstandete Dampfablassöffnungen (18a, 18b) aufweist und
- die an der hinteren Seitenwand (9h) vorhandene mindestens eine Halterung (11) zwischen den am weitesten voneinander beabstandeten Dampfablassöffnungen (18a, 18b) angeordnet ist.

14. Dampfgarschublade (2) nach einem der vorhergehenden Ansprüche einschließlich den Ansprüchen 3 und 7, wobei
- der Dampfzufuhrkanal (7) genau eine Y-förmige Verzweigung mit genau zwei Auslasszweigen (15a, 15b) aufweist und
- die beiden Auslasszweige (15a, 15b) zu jeweils einem von zwei Dampfzufuhröffnungen (17a, 17b) des Gargutbehälters (9) führen.

## Claims

1. Steam-cooking drawer (2), in particular household steam-cooking drawer (2), with a drawer compartment (1) which can be moved in and out of a drawer housing (3), having
- a cooking chamber (8) which can be subdivided into at least two sub-chambers (8a, 8b) by means of at least one partition (12), which cooking chamber has a trough-shaped container for food to be cooked (9) which can be covered by a lid,
- at least one thermally insulating partition (12) which is configured to subdivide the cooking chamber (8) or a sub-chamber (8a, 8b) thereof into two sub-chambers (8a, 8b) in a steam-tight manner,
- a wet steam generator (5),
- a steam feed channel (7) which is configured to guide steam (D) generated by the wet steam generator (5) into the cooking chamber (8),
- at least one steam outlet channel (10) which is configured to divert steam (D) out of the cooking chamber (8),
wherein
- the steam feed channel (7) is configured to guide steam (D) generated by the wet steam generator (5) into each of the sub-chambers (8a, 8b),
and further having
- a number of heating elements (20, 28), wherein at least one heating element (20, 28) is assigned to each of the potential sub-chambers (8a, 8b) for the selective heating thereof,
wherein
- the steam-cooking drawer (2) is configured, depending on the position of the at least one partition (12) inserted into the container for food to be cooked (9), to selectively control the heating elements (20, 28) belonging to the sub-chambers (8a, 8b) created by the partition.

2. Steam-cooking drawer (2) according to claim 1, wherein the steam-cooking drawer (2) has a detection facility (6, 21) for identifying a position of the at least one partition (12) in the container for food to be cooked (9) and is configured to selectively control the heating elements (20, 28) belonging to the sub-chambers (8a, 8b) created by way of the at least one partition (12) based on a position of the at least one partition (12) identified by the detection facility (6, 21).

3. Steam-cooking drawer (2) according to claim 2, wherein the detection facility (6, 21) comprises a number of switches (21), which can be actuated mechanically at least in the retracted state of the steam-cooking drawer (2) by way of the at least one inserted partition (12), and wherein the steam-cooking drawer (2) is configured, based on an actuation of the switches (21), to selectively control the heating elements (20, 28) belonging to the sub-chambers (8a, 8b) created by the at least one partition (12).

4. Steam-cooking drawer (2) according to claim 3, wherein the switches (21) are arranged at potential positions of the at least one partition.

5. Steam-cooking drawer (2) according to one of the preceding claims, wherein at least two heating elements (20) are arranged on the container for food to be cooked (9), in particular on a base (23) of the container for food to be cooked (9).

6. Steam-cooking drawer (2) according to one of the preceding claims, wherein at least two heating elements (28) are arranged on the lid.

7. Steam-cooking drawer (2) according to one of the preceding claims, wherein the selective control comprises a control of only one part of the heating elements (20, 28) assigned to the at least one sub-chamber (8a, 8b) and/or a non-activation of the heating elements (20, 28) assigned to the at least sub-chamber (8a, 8b).

8. Steam-cooking drawer (2) according to one of the preceding claims, wherein the heating elements (20, 28) can be controlled such that heating energy introduced by the heating elements (20, 28) into the respective sub-chambers (8a, 8b) is distributed according to an area of the sub-chambers (8a, 8b).

9. Steam-cooking drawer (2) according to one of the preceding claims, wherein the steam feed channel (7)
- has a steam inlet (15c) connected to the wet steam generator (5) and at least one branching (15) with at least two outlet branches (15a, 15b) leading to the cooking chamber (8) and
- at least one branching (15) has an adjusting facility (16), which can be controlled so as to proportionately adjust a steam throughput (Vout1, Vout2) by way of the outlet branches (15a, 15b).

10. Steam-cooking drawer (2) according to claim 9, wherein at least one branching (15) has precisely two outlet branches (15a, 15b).

11. Steam-cooking drawer (2) according to one of the preceding claims, wherein the steam feed channel (7) has a steam outlet opening which opens into all potential sub-chambers (8a, 8b).

12. Steam-cooking drawer (2) according to one of the preceding claims, wherein the container for food to be cooked (9)
- has at least one steam feed opening (17a, 17b) inserted into a front side wall (9v), through which steam (D) flowing out of the steam feed channel (7) can flow into the container for food to be cooked (9), and
- has at least one steam outlet opening (18a, 18b) inserted into a rear side wall (9h).

13. Steam-cooking drawer (2) according to claim 12, wherein at least on the front side wall (9v) and on the rear side wall (9h) of the container for food to be cooked (9), holders (11) for inserting at least one partition (12) are present, wherein
- the container for food to be cooked (9) has at least two steam feed openings (17a, 17b) on its front side wall (9v) laterally spaced apart from one another,
- the at least one holder (11) provided on the front side wall (9v) is arranged between the steam feed openings (17a, 17b) that are spaced furthest apart from one another,
- the container for food to be cooked (9) has at least two steam feed openings (18a, 18b) on its rear side wall (9h) laterally spaced apart from one another and
- the at least one holder (11) provided on the rear side wall (9h) is arranged between the steam feed openings (18a, 18b) that are spaced furthest apart from one another.

14. Steam-cooking drawer (2) according to one of the preceding claims including claims 3 and 7, wherein
- the steam feed channel (7) has precisely one Y-shaped branching with precisely two outlet branches (15a, 15b) and
- the two outlet branches (15a, 15b) lead to one of two steam feed openings (17a, 17b) of the container for food to be cooked (9).

## Revendications

1. Tiroir de cuisson à la vapeur (2), en particulier tiroir de cuisson à la vapeur d'un appareil électroménager (2), comprenant un compartiment tiroir (1) pouvant être extrait d'un caisson à tiroir (3) et y être inséré, présentant
- un espace de cuisson (8) subdivisible au moyen d'au moins une cloison (12) en au moins deux espaces partiels (8a, 8b), lequel espace comprend un conteneur d'aliment à cuire (9) en cuvette pouvant être recouvert d'un couvercle,
- au moins une cloison (12) thermiquement isolante, laquelle est configurée pour subdiviser l'espace de cuisson (8) ou un espace partiel (8a, 8b) de celui-ci étanche à la vapeur en deux espaces partiels (8a, 8b),
- un générateur de vapeur mouillante (5),
- un canal d'amenée de vapeur (7), lequel est configuré pour conduire à l'espace de cuisson (8) la vapeur (D) produite par le générateur de vapeur mouillante (5),
- au moins un canal d'évacuation de la vapeur (10), lequel est configuré pour évacuer la vapeur (D) de l'espace de cuisson (8),
dans lequel
- le canal d'amenée de vapeur (7) est configuré pour conduire la vapeur (D) produite par le générateur de vapeur mouillante (5), dans chacun des espaces partiels (8a, 8b)
et comprend en outre
- plusieurs éléments chauffants (20, 28), à chacun des éventuels espaces partiels (8a, 8b) étant associé au moins un élément chauffant (20, 28) pour un chauffage sélectif,
- le tiroir de cuisson à la vapeur (2) étant configuré pour, en fonction de la position de la au moins une cloison (12) insérée dans le conteneur d'aliment à cuire (9), amorcer sélectivement les éléments chauffants (20, 28) appartenant aux espaces partiels (8a, 8b) créés par eux.

2. Tiroir de cuisson à la vapeur (2) selon la revendication 1, dans lequel le tiroir (2) comprend un dispositif de détection (6, 21) pour la reconnaissance d'une position de la au moins une cloison (12) dans le conteneur d'aliment à cuire (9) et est configuré pour amorcer sélectivement les éléments chauffants (20, 28) appartenant aux espaces partiels (8a, 8b) créés par la au moins une cloison (12) sur base d'une position reconnue par le dispositif de détection (6, 21) de la au moins une cloison (12).

3. Tiroir de cuisson à la vapeur (2) selon la revendication 2, dans lequel le dispositif de détection (6, 21) comprend plusieurs commutateurs (21) qui peuvent être actionnés à tout le moins si les tiroirs (2) sont insérés, mécaniquement par la au moins une cloison (12) insérée et dans lequel le tiroir (2) est configuré pour amorcer sélectivement les éléments chauffants (20, 28) appartenant aux espaces partiels (8a, 8b) créés par la au moins une cloison (12).

4. Tiroir de cuisson à la vapeur (2) selon la revendication 3, dans lequel les commutateurs (21) se trouvent sur des positions possibles de la au moins une cloison.

5. Tiroir de cuisson à la vapeur (2) selon l'une des revendications précédentes, dans lequel au moins deux éléments chauffants (20) sont disposés sur le conteneur d'aliment à cuire (9),
en particulier sur le plancher (23) du conteneur d'aliment à cuire (9).

6. Tiroir de cuisson à la vapeur (2) selon l'une des revendications précédentes, dans lequel au moins deux éléments chauffants (20) sont disposés sur le couvercle.

7. Tiroir de cuisson à la vapeur (2) selon l'une des revendications précédentes, dans lequel l'amorce sélective comprend l'amorce de seulement une partie des éléments chauffants (20, 28) associés à au moins un espace partiel (8a, 8b) et/ou une absence d'amorce des éléments chauffants (20, 28) associés à au moins un espace partiel (8a, 8b).

8. Tiroir de cuisson à la vapeur (2) selon l'une des revendications précédentes, dans lequel les éléments chauffants (20, 28) peuvent être amorcés de sorte qu'une énergie chauffante, introduite par les éléments chauffants (20, 28) dans les espaces partiels respectifs (8a, 8b), est répartie en fonction de la surface des espaces partiels (8a, 8b).

9. Tiroir de cuisson à la vapeur (2) selon l'une des revendications précédentes, dans lequel le canal d'amenée de vapeur (7)
- comprend une entrée de vapeur (15c) raccordée au générateur de vapeur mouillante (5) et au moins une ramification (15) comprenant au moins deux branches d'échappement (15a, 15b) conduisant à l'espace de cuisson (8) et
- au moins une ramification (15) comprend un dispositif de réglage (16), lequel peut être amorcé pour régler en toute proportion un débit de vapeur (Vout1, Vout2) passant par les branches d'échappement (15a, 15b).

10. Tiroir de cuisson à la vapeur (2) selon la revendication 9, dans lequel au moins une ramification (15) comprend exactement deux branches d'échappement (15a, 15b).

11. Tiroir de cuisson à la vapeur (2) selon l'une des revendications précédentes, dans lequel le canal d'amenée de vapeur (7) dispose d'un orifice d'évacuation de vapeur, lequel débouche dans tous les espaces partiels (8a, 8b) possibles.

12. Tiroir de cuisson à la vapeur (2) selon l'une des revendications précédentes, dans lequel le conteneur d'aliment à cuire (9)
- comprend au moins un orifice d'amenée de vapeur (17a, 17b) pratiqué dans une paroi latérale avant (9v), à travers lequel de la vapeur (D) s'écoulant du canal d'amenée de vapeur (7) peut s'écouler dans le conteneur d'aliment à cuire (9), et
- comprend au moins un orifice d'évacuation de vapeur (18a, 18b) pratiqué dans une paroi latérale arrière (9h).

13. Tiroir de cuisson à la vapeur (2) selon la revendication 12, dans lequel au moins sur la paroi latérale avant (9v) et sur la paroi latérale arrière (9h) du conteneur d'aliment à cuire (9) se trouvent des fixations (11) pour l'insertion d'au moins une cloison (12) dans lequel
- le conteneur d'aliment à cuire (8) comprend, sur sa paroi latérale avant (9v) au moins deux orifices d'amenée de vapeur (17a, 17b) latéralement écartés l'un de l'autre,
- la au moins une fixation (11) présente sur la paroi latérale avant (9v), se trouve entre les orifices d'amenée de vapeur (17a, 17b) les plus écartés les uns des autres,
- le conteneur d'aliment à cuire (8) comprend, sur sa paroi latérale arrière (9h) au moins deux orifices d'évacuation de vapeur (18a, 18b) latéralement écartés l'un de l'autre, et
- la au moins une fixation (11) présente sur la paroi latérale arrière (9v), se trouve entre les orifices d'évacuation de vapeur (18a, 18b) les plus écartés les uns des autres.

14. Tiroir de cuisson à la vapeur (2) selon l'une des revendications précédentes incluant les revendications 3 et 7, dans lequel
- le canal d'amenée de vapeur (7) comprend exactement une ramification en Y avec précisément deux branches d'échappement (15a, 15b) et
- les deux branches d'évacuation (15a, 15b) conduisent à chaque fois à l'un des deux orifices d'amenée de vapeur (17a, 17b) du conteneur d'aliment à cuire (9).
